Europäisches Patentamt

European Patent Office

Office européen des brevets

(19)

(11) Publication number: **0 045 328**
**B1**

(12) **EUROPEAN PATENT SPECIFICATION**

(45) Date of publication of patent specification: **23.11.83**

(51) Int. Cl.³: **G 11 B 15/66**

(21) Application number: **80104616.0**

(22) Date of filing: **06.08.80**

(54) **A loading mechanism for a cassette tape recorder.**

(43) Date of publication of application:
**10.02.82 Bulletin 82/6**

(45) Publication of the grant of the patent:
**23.11.83 Bulletin 83/47**

(84) Designated Contracting States:
**AT BE CH FR IT LI LU NL SE**

(56) References cited:
**DE - B - 2 406 529**
**GB - A - 1 441 292**
**US - A - 3 831 198**
**US - A - 3 864 742**

(73) Proprietor: **Efuti Giken Co.,LTD.**
**6-1-12, Rokkakubashi**
**Kanagawa-ku Yokohama-shi Kanagawa-ken (JP)**

(73) Proprietor: **Funai Electric Co., Ltd.**
**7-627 Nakagaido**
**Daito-shi Osaka (JP)**

(72) Inventor: **Kawai, Tsutomu**
**Yokosuka Heim Room No.711 28, Ogawa-cho**
**Yokosuka-shi Kanagawa-ken (JP)**

(74) Representative: **Lehn, Werner, Dipl.-Ing. et al,**
**Hoffmann, Eitle & Partner Patentanwälte**
**Arabellastrasse 4 (Sternhaus)**
**D-8000 München 81 (DE)**

## A loading mechanism for a cassette tape recorder

This invention relates to a loading mechanism for a cassette tape recorder comprising a drive control operable to select a recording or playback mode, a drive system operable in response to operation of said drive control to draw tape out of a cassette through a pinch roller movable between an unloaded position associated with the cassette and a loaded position to carry the tape to the loaded position for a recording or playback mode of operation, and a stop control operable to restore the pinch roller to the unloaded position to terminate said mode and particularly, but not exclusively, to portable video cassette tape recorders. Such a loading mechanism is known from US-A-3 831 198.

In video cassette tape recorders it is necessary to draw the tape out of the cassette so that it can be brought into operative engagement with electrical control elements such as, a rotary head, erase heads and an audio control head. At the end of a playing or recording operation it is necessary to rewind the tape drawn out of the cassette, back into the cassette before the cassette can be removed from the machine.

Applicants copending application nr. 80 104 612.9 (EP-A-0045 324) of same date discloses a loading mechanism in which the pinch roller is urged downwardly during its movement to have the tape passed round the a rotary head at an inclined angle.

Applicants copending application nr. 80 104 613.7 (EP-A-0045 325) of same date discloses a loading mechanism including loading rings carrying a pinch roller and a draw out pin respectively and being movable in opposite directions to draw tape out of the cassette.

Applicants copending application nr. 80 104 614.5 (EP-A-0045 326) of same date discloses a loading mechanism including special arrangement and operation of gears for driving a loading ring provided with a pinch roller.

The present invention seeks to provide a mechanism whereby the tape can be rewound into the cassette without excessive force in a simple and reliable manner.

For solving this problem there is provided a loading mechanism for a cassette tape recorder as described above which according to the invention is characterized by the operation of the drive control moving a slide plate to a drive position in which said slide plate urges a drive idler into driving engagement with a tape take-up reel to transport the tape; and the drive system including a plate pivotable when the stop control is operated, to prevent the slide plate moving to disengage the drive idler from the take-up reel so that the drawn out tape may be wound into the cassette following restoration of the pinch roller to the unloaded position.

Preferably, a locating element is provided which is movable, when the pinch roller reaches the loaded position, to switch on an electrically operable plunger, the plunger having first and second elements movable when the plunger is switched on to, respectively, urge the pinch roller against a drive capstan, sandwiching the tape therebetween to thereby transport the tape, and to move the slide plate to the drive position.

Preferably, the drive idler is connected to the slide plate through resilient means so that the drive idler is urged into contact with said reel only through said resilient means.

An embodiment of the invention will now be described by way of example with reference to the accompanying drawings, in which:—

Fig. 1 is a general view,

Figs. 2 to 4 are views of a cassette,

Fig. 5 is a view showing when the cassette is set to load the tape in a playback condition,

Fig. 6 is a view of a gear train,

Fig. 7 is a sectional view of a support gear at a first loading gear ring fixed to the chassis,

Fig. 8 is a view showing a loading function of the gear train,

Fig. 9 is a view showing operation at an end of loading,

Fig. 10 is a view of an unloading operation,

Fig. 11 is a view showing operation at an end of unloading,

Figs. 12 and 13 are explanatory views of operating conditions of each mechanism when a pinch roller press-contacting plunger operates and stops,

Figs. 14 and 15 are explanatory views of a guide for the pinch roller,

Fig. 16 is a side view of a draw-out pin,

Fig. 17 is a view partially showing a rapid feed condition,

Fig. 18 is a partial view of a rewinding condition,

Fig. 19 is an explanatory view of a brake member,

Figs. 20 and 21 are views of a lever mechanism for control buttons,

Figs. 22 and 23 are views showing a playback control locked condition of the mechanism shown in Figs. 20 and 21,

Fig. 24 is a view of a lock mechanism for control buttons in a non-control condition, and,

Figs. 25 and 26 are explanatory views of the operation of the mechanism shown in Fig. 24.

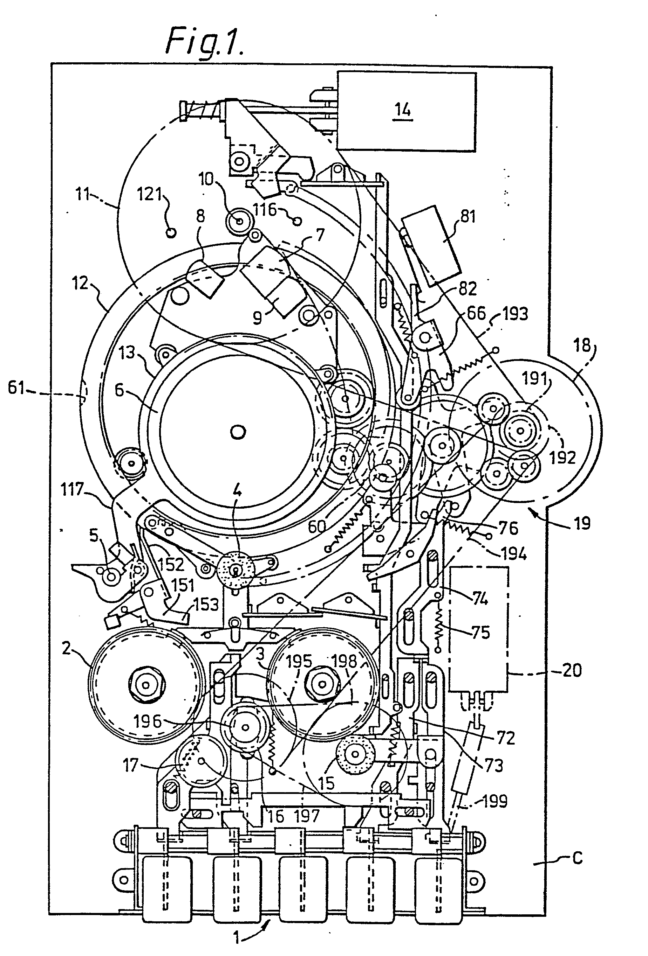

Fig. 1 shows the mechanism of a video tape recorder which is not in operation, in which reference 1 is a group of control buttons, 2 is a feeder reel, 3 is a take-up reel, 4 is a pinch roller, 5 is a tape take-out pin, 6 is a rotary head, 7 is a voice control head, 8 is a whole width erasing head, 9 is a voice erasing head, 10 is a capstan, 11 is a flywheel, 12 is a first loading gear ring pivotally supporting the pinch roller 4, 13 is a second loading gear ring provided with the tape take-out pin 5, 14 is a plunger to urge the pinch roller 4 into contact with the capstan 10, 15 is an idler for driving the take-up reel 3, 16 is a rapid feed transmission gear, 17 is a return transmission gear, 18 is a drive motor, 19 is a gear train for transmitting rotation of motor 18 to the first loading gear ring 12 and second loading gear ring 13, and 20 is an automatic stopping plunger. The detailed construction and relative function of each of the above components will be described as follows.

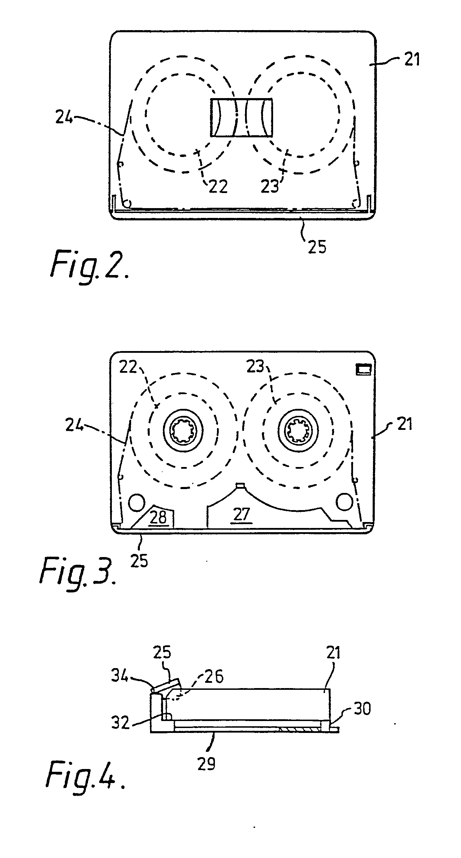

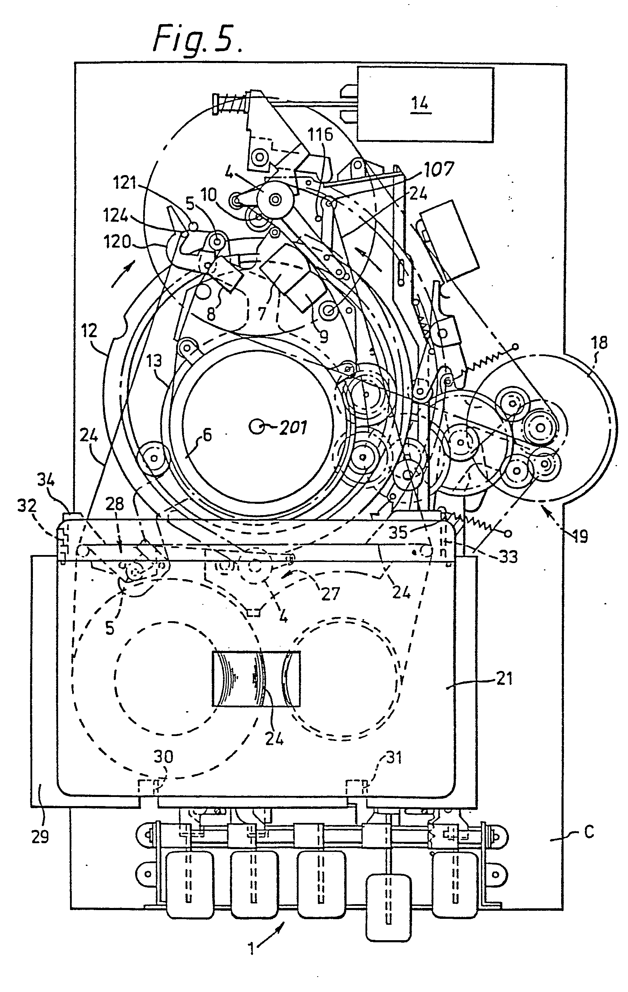

A cassette 21 for video tape used in this embodiment is the smallest at present available and is about 106 mm wide, 68 mm long, and 12 mm thick. A magnetic video tape 24 wound onto a pair of tape reels, 22, 23 is housed within the cassette 21 as shown in a plan view in Fig. 2, a bottom view in Fig. 3, and a side view in Fig. 4. The cassette 21 has a tape take-out face at its front edge normally closed by an opening-and-closing lid 25 pivoted 26 thereto, the lid 25 being biased to the closed position by a spring or the like. The cassette 21 also, as shown in Figs. 3 and 5, is provided at the front of the lower wall with a recess 27 into which the pinch roller 4 and a recess 28 into which the tape take-out pin 5 engage when the cassette is located in the apparatus in an operative position. Fig. 4 shows the cassette 21 set on a cassette mount base 29 located above the reels 2, 3. The cassette base 29, as shown in Fig. 5, has cassette support pieces 30, 31, 32, and 33, the pieces 32, 33 also including abutments 34, 35 for automatically opening the lid 25. When the cassette 21 is set on the base 29 as shown in Figs. 4 and 5, the lid 25 abuts at its foremost end against abutments 34, 35, thereby being kept open.

In this position of the cassette, the pinch roller 4 pivoted to the first loading gear ring 12 and the tape take-out pin 5 on the second loading gear ring 13 are positioned within the recesses 27, 28. In order to pull-out the tape 25 shown by the solid line in Fig. 5 and keep it in the loaded condition (video recording or regenerating condition), the pinch roller 4 and take-out pin 5, as shown by the phantom line in Figure 5, are positioned at the rear of the tape 24 within the recesses 27, 28 respectively. Then, the first and second loading gear rings 12 and 13 are rotated in the opposite directions to move the pinch roller 4 and take-out pin 5 in the loading direction, thereby drawing out the tape 24. Hence, the tape 24 is brought into contact with the electric elements, comprising the rotary head 6, voice control head 7, whole width erasing head 8, and voice erasing head 9. The tape is further pressed into contact with the capstan 10 through the pinch roller 4, whereby feed rotation of capstan 10 by the motor 18 and rotation of the take-up reel 3 through idle roller 15 transports the tape for video recording and regeneration.

Rotation of the first and second loading gear rings 12 and 13 necessary for the loading of tape 24 is carried out by the gear train 19 connected appropriately to the motor 18.

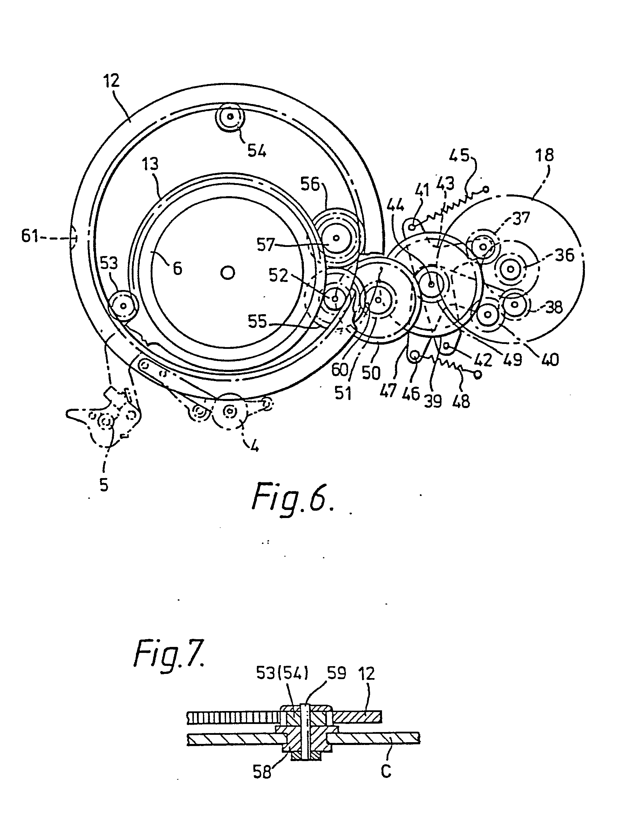

A basic gear 36, as shown in Fig. 6, is mounted on the rotary shaft of motor 18. Two gears 37, 38 are selectively capable of being connected to the gear 36, the gears 37, 38 being shown in a neutral disengaged position. One gear 37 is rotatable to provide a forward drive and is meshed with a larger gear 39, and the other gear 38 for reverse drive is meshed with the larger gear 39 through an intermediate gear 40.

Also, the gear 37 is rotatably mounted on a swingable plate 43 of T-like shape and having pins 41, 42 at opposite ends thereof, the plate 43 being pivoted at an intermediate portion between said ends about a shaft 44 of the larger gear 39, the pin 41 and hence the plate 43 being biased by a spring 45 in the direction of connecting the gear 37 with the basic gear 36. The gear 38 is pivoted to one end of a rocking plate 47 of L-like shape and having at the other end a pin 46, the plate 47 being pivoted at its intermediate portion about the shaft 44 of larger gear 39. The plate 47 is biassed by a spring 48 extending between the pin 46 and the recorder chassis in the direction of connecting the gear 38 with the basic gear 36. Thus, the two rocking plates 43, 47 are selectively switched to transmit the normal and reverse rotations to the larger gear 39. The larger gear 39 is integral with a pinion 49 whose rotation is transmitted to a speed change gear 50 and a pinion 51 integral therewith.

On the other hand, the first loading gear ring 12 has at its inner periphery a gear profile and is supported radially by support pinions 52, 53 and 54 in mesh with the gear profile. One support pinion 52 is integral with a gear 55 in mesh with the pinion 51 driven by the motor 18 through the gear 37 or 38, whereby normal or reverse rotation of motor 18 is transmitted to the first loading gear ring 12. Upon rotation of first loading gear ring 12, another connecting gear 56 in mesh with the inner gear profile at the ring 12 is rotated. Rotation of the connection gear 56 is transmitted through a pinion 57 integral with the gear 56 to the second loading gear ring 13 provided rotatably on the outer periphery of rotary head 6 to rotate the gear ring 13 in the opposite direction.

Hence, the pinion 37, when engaged with gear 36, rotates the first and second loading gear rings 12 and 13 in the opposite direction (as shown by the arrows in Figure 5), thereby driving the pinch roller 4 and take-out pin 5 out of the recesses 27, 28 following the rotation of rings 12, 13, thus drawing the tape 24 out of the cassette 21 toward the opposite peripheral sides of rotary head 6.

The pinch roller 4 presses the tape 24 into contact with the capstan 10 by means of the plunger 14, operated by a mechanism to be hereinafter described, at which time the tape 24 extends to the pinch roller 4 side from the pin 5 successively through the whole width erasing head 8, rotary head 6, voice erasing head 9, voice control head 7, and capstan 10. In addition, the support gears 53, 54, which support the first loading gear ring 12 at the inner periphery thereof, are, as shown in Fig. 7, fixed to gear shafts 59 rotatably supported on a press-fit member 58 fixed to a chassis C respectively.

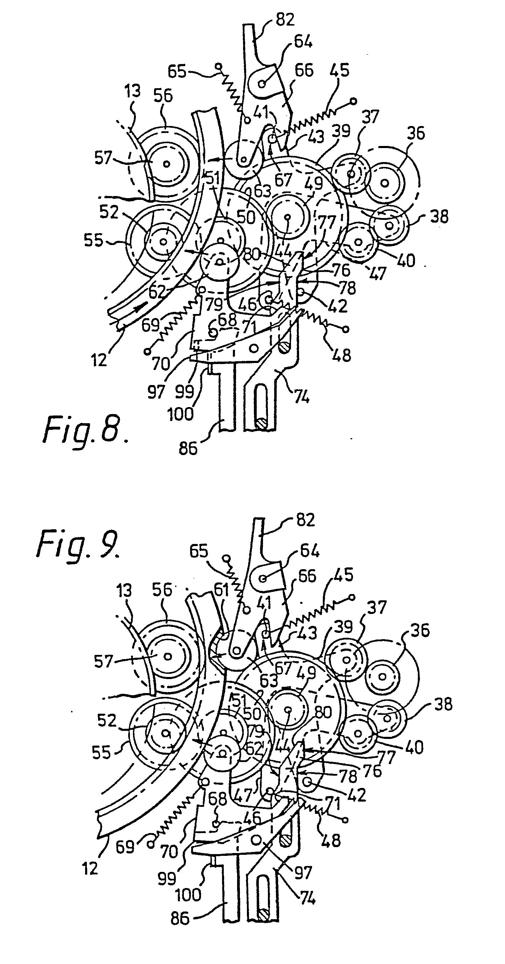

A mechanism for a cessation of rotation of the gear rings 12, 13 at the correct location at a finish of loading or unloading, comprises semicircular recesses, 60, 61 of different depths and provided at the outer periphery of ring 12, and two elastic members, leaf springs or rollers 62, 63 selectively insertable into the recesses 60, 61 respectively as shown in Figs. 8 through 11. A cessation when loading is finished, as shown in Fig. 9, is carried out by the roller 63 engaging into the recess 61.

In detail, the roller 63 is mounted rotatably on one end of a rocking plate 66 which is pivoted to a spindle 64 and biased by a spring 65 to always urge the roller 63 into contact with the outer periphery of ring 12, the rocking plate 66 being angled to approach the ring 12 in the loading direction and to escape from the ring 12 in the unloading direction. A V-shaped notch or recess 67 is formed in the rocking plate 66, which engages with the pin 41 at one end of the rocking plate 43 provided at the forward rotation gear 37. When the roller 63 fits into the recess 61 in the outer periphery of ring 12 in the loading condition shown in Fig. 8, the rocking plate 66 swings in the direction of the arrow in Fig. 9 and moves the pin 41 at rocking plate 43 through one side of the recess 67 against the spring 45 to thereby swing the rocking plate 43 about the shaft 44, thus disengaging the gear 37 from the basic gear 36. Hence, the ring 12, which is rotated through the gear 37, stops its rotation in the loading direction.

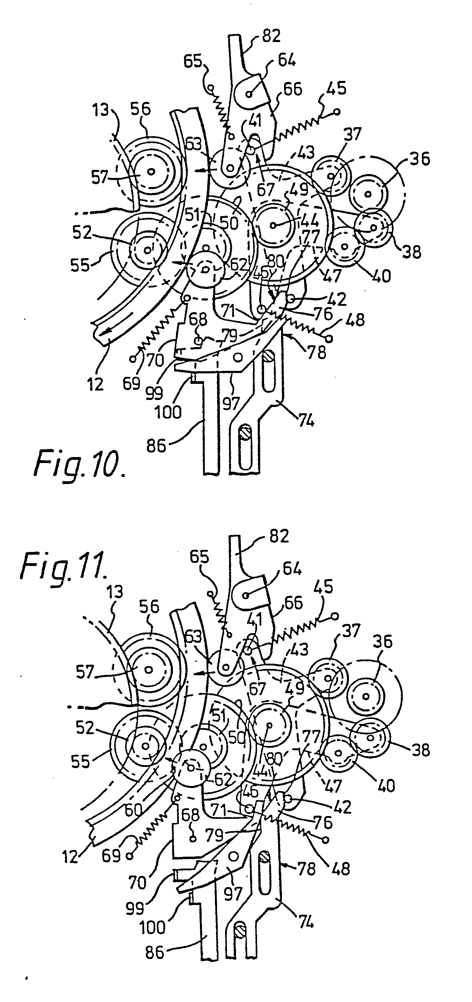

The ring 12, when unloading is finished i.e. when the pin 5 and pinch roller 4 are in position shown in Figure 1, is stopped when the roller 62 engages into the recess 60. In detail, the roller 62 is provided rotatably at one end of a rocking plate 70 which is pivotable about a shaft 68 and is biased by a spring 69 to always urge the roller 62 into contact with the outer periphery of ring 12, the rocking plate 70 being angled to move the roller 62 toward the ring 12 with respect to the unloading direction and to escape from the ring 12 in the loading direction. Also, the rocking plate 70 has at its other end a hook 71 which contacts the pin 46 on the rocking plate 47 provided at the reverse gear 38. When the roller 62 is in the unloaded condition shown in Fig. 10, it engages into the recess 60 in the outer periphery of ring 12, and the rocking plate 70 turns in the direction of the arrow in Fig. 11 to pull the pin 46 on rocking plate 47 to thereby turn the rocking plate 47 around the shaft 44, thus disengaging the gear 38 from the basic gear 36. Consequently, the ring 12 reversely rotated through the gear 38 stops its rotation and is then located in the unloading position. The recess 60 is so positioned that when the pinch roller 4 and take-out pin 5 in association relative therewith are positioned within the recesses 27, 28 of the cassette 21, the roller 62 is located in the recess 60. The recess 61 is so positioned that when the pinch roller 4 and take-out pin 5 reach their loading positions respectively, the roller 63 is located in the recess 61.

Furthermore, the selective engagement of the normal rotation gear 37 and reverse rotation gear 38 is controlled by a regeneration button (PLAY) and video recording button (REC) of a group 1 of operating buttons of self-locking type to be hereinafter described. Either button (PLAY) or (REC) may be operated to move a common slide plate 74 through slide plates 72, 73, respectively, the slide plate 74 being biased by a spring 75 against the operating direction and having at its tip a cam 76. The cam 76, as shown in Fig. 11, has cam faces 77, 78 in parallel but spaced laterally, the cam faces 77, 78 being arranged to abut against the pin 42 of the rocking plate 43. When the cam face 77 engages the pin 42 against the bias of the spring 45, in other words, in the condition of not operating the buttons 72, 73, the gear 37 is disengaged from the basic gear 36 to transmit no rotation to the rings 12, 13. However, when either of the slide plates 72 or 73 is operated, the common slide plate 74 moves so that the cam face 78 abuts against the pin 42, whereby the rocking plate 43 is pivoted slightly through the spring 45 and the normal rotation gear 37 meshes with the basic gear 36 for forward drive. Hence, the motor 18 rotates both the rings 12, 13 through the transmission gear train to move the pinch roller 4 and take-out pin 5 in the loading direction to enable recording or playback to take place.

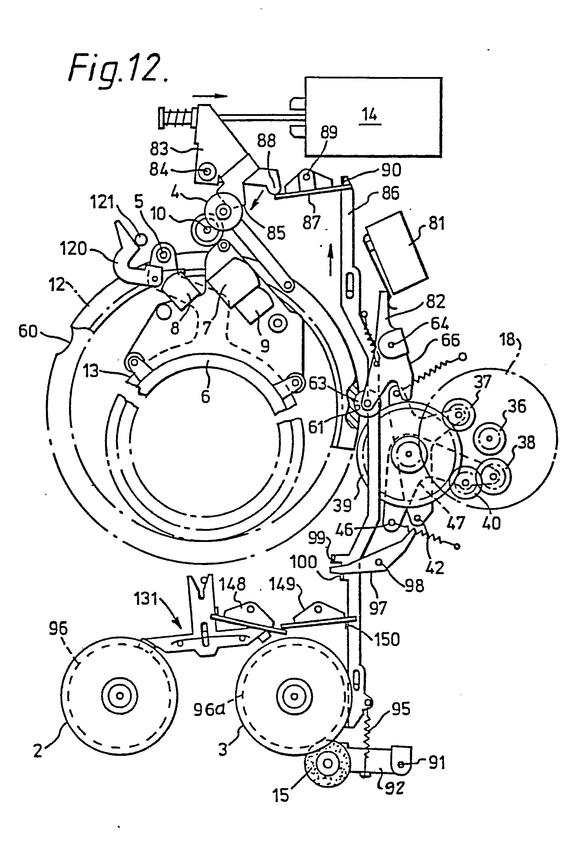

At the other edge of common slide plate 74 are formed stepped cam faces 79, 80, which abut against the pin 46 on the rocking plate 47 carrying the reverse rotation gear 38. When the cam face 79 restricts the pin 46 against the spring 48, in other words, in condition of operating the button (PLAY) or (REC), the gear 38 is disengaged from the basic gear 36. When the stop button (STOP) is operated or an automatic stopping mechanism acts, in the condition of loading as shown in Fig. 12, the regeneration button (PLAY) or video recording button (REC) is released through the self-locking mechanism in control button group 1, and simultaneously the common slide plate 74 returns through the action of spring 75. Then, the pin 46 on rocking plate 47 moves from the cam face 79 to the cam face 80 and abuts thereagainst and the plate 47 is pivoted slightly by the spring 48 to mesh the reverse rotation gear 38 with the basic gear 36, thereby transmitting reverse rotation to the rings 12, 13 to return the apparatus to the unloading condition. In addition, when the movement to the unloading position is completed and the roller 62 is engaged in the recess 60, the pin 46, even when abutting against the cam face 80, is restricted by the hook 71 on rocking plate 70, so that the reverse rotation gear 38 is not engaged with the basic gear 36, thus transmitting no rotation to the rings 12, 13.

Upon operation of regeneration button (PLAY) or video recording button (REC), the normal rotation gear 37 engages with the basic gear 36 through the cam face 76 on the common slide plate 74 to move the rings 12, 13 to the loaded condition. Next, when the loading movement is completed and the pinch roller 4 and take-out pin 5 have moved, together with the tape 24, so as to reach the fixed position shown in Fig. 12, the roller 63, as shown in Fig. 9, is engaged in the recess 61 in ring 12 to move the normal rotation gear 37 away from the basic gear 36 to thereby stop the loading action. The rocking plate 66 carrying the roller 63 includes a limb forming an actuator 82 for operating a switch 81 to actuate the plunger 14, so that the plunger is actuated upon the cessation of loading. At the outer end of plunger 14 there is provided a pusher 83 pivotable about a spindle 84, the pusher 83 urging the pinch roller 4 against the capstan 10 through a contact surface 85 when the plunger 14 is actuated. The pusher 83 is also operatively connected to an elongate slide plate 86 through a connector 87, movement of the slide plate 86 engaging or disengaging the idler 15 with or from the take-up reel 3 in order to transmit thereto rotation of for regeneration or video recording. The loading starts from the condition in Fig. 1 and the plunger is actuated as shown in Fig. 12, then the contact surface 85 pushes the pinch roller 4 spindle, thereby press-contacting roller 4 with the capstan 10 to convey the tape 4 by sandwiching it therebetween.

A tongue 88 is provided on the pusher 83 and abuts against one end of connector 87. The connector 87 pivots around its spindle 89 and connects at the other end with a projection 90 on the elongate slide plate 86. The idler 15 is mounted on an arm 92 swingable around a spindle 91, the arm 92 being biased at its edge 93 towards another projection 94 of slide plate 86 through a spring 95. Hence, when the plunger 14 is turned-on, the idler 15 abuts against a smaller diameter portion 96 integral with the lower portion of take-up reel 3, following the movement of slide plate 86 in the direction of the arrow in Figure 12, thereby transmitting rotation in the take-up direction to the reel 3 through a drive mechanism to be hereinafter described.

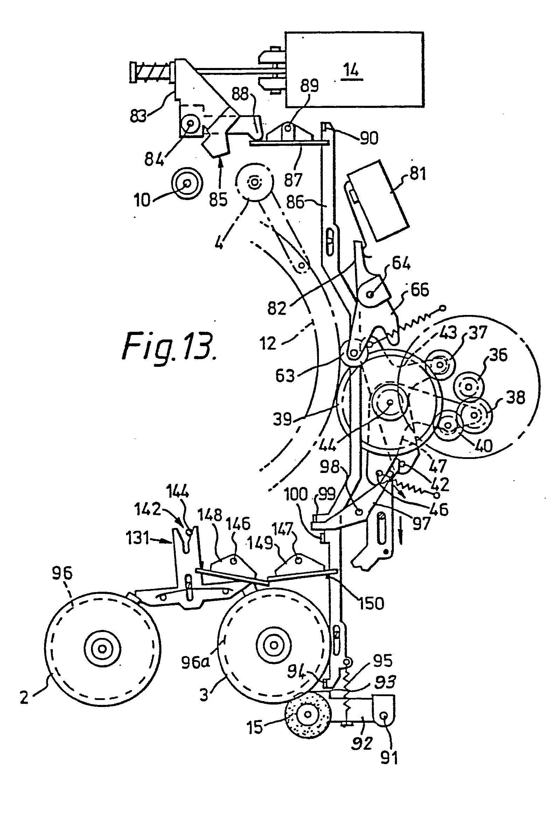

Next, when the regeneration or video recording is finished and the stop button (STOP) is operated, the plunger is turned-off to release the pinch roller 4 from engagement with the capstan 10. The pin 42 on rocking plate 43 carrying the normal rotation gear 37 which disengages from the basic gear 36 when the roller 63 engages in the recess 61, is abutting against the cam face 77 (Fig. 11) at the common slide plate 74 which is returned by the stop button (STOP), thereby keeping the gear 37 disengaged from the basic gear 36. Simultaneously, the pin 46 on rocking plate 47 carrying the reverse gear 38 abuts against the cam face 80 at the common slide plate 74, because the roller 62 is positioned on the outer periphery of ring 12 (not being engaged in the recess 60) and the hook 71 on the rocking plate 70 is released from the pin 46. At this time the reverse rotation 38 meshes with the basic gear 36 to put the ring 12 in unloading condition. However, even when the plunger 14 is turned-off to put the ring in the unloading condition, the loading tape 24 must first be wound-up within the cassette 21. Hence, the elongate slide plate 86, as shown in Fig. 13, is provided with a rocking plate 97 which restrains the plate 86 from its return even when the plunger 14 is turned-off, and which keeps the idler 15 in engagement with the smaller diameter portion 96 of the take-up reel 3. The rocking plate 97 is pivoted at its intermediate portion on a spindle 98, and is inserted at one end between two further projections 99, 100 formed on the elongate slide plate 86, and abuts at its other end against the pin 42 on rocking plate 47. In the unloading condition of meshing the reverse rotation gear 38 with the basic gear 36 as foregoing, the pin 46 on rocking plate 47 urges the other end of rocking plate 97 to turn the plate 97 around the spindle 98 and the other end of plate 97 checks through the projection 99 the slide plate 86 which is biased to return on the turn-off of plunger 14. As a result, even during the unloading, the idler 15 is urged against the smaller diameter portion 96 so as to allow the take-up reel 3 to wind up the tape 4.

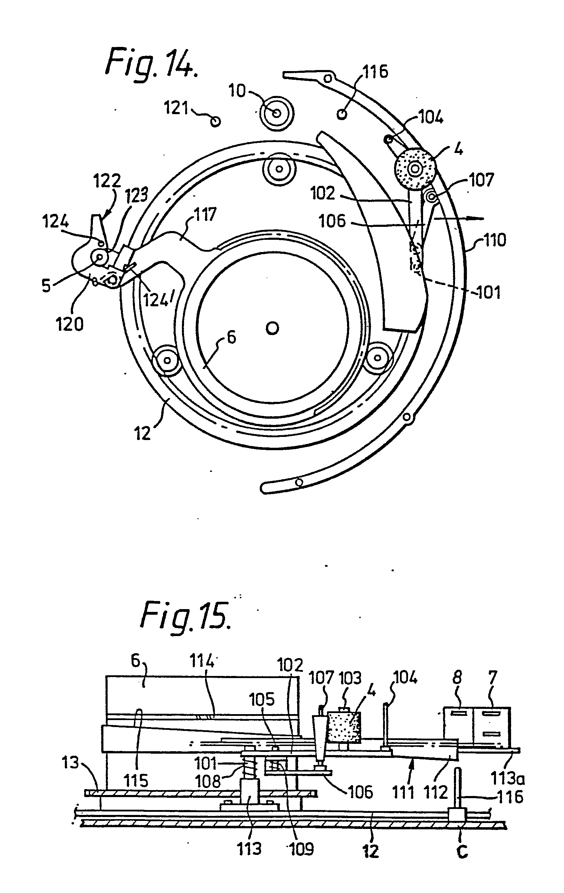

Now, a mechanism for placing the tape 24 on the rings 12, 13 will be detailed. The pinch roller 4, as shown in Figs. 14 and 15, is pivotally mounted on a spindle 103 at one end of arm 102 which is itself pivotally mounted at its other end through a spindle 101 to a cylinder 113 fixed to the ring 12. A pin 104 is provided at the foremost end of arm 102. A small arm 106 is pivotally connected at one of its ends to an intermediate portion of arm 102 through a spindle 105 and has at its other end a tapered roller 107. The arm 102 fixedly supports a spindle 101 which is mounted vertically movably to the cylinder 113 through a spring 108 and supports the pinch roller 4 to escape radially outwardly (in the arrow direction shown in Figure 14) from the ring 12. The tapered roller 107 similarly is formed to escape radially outwardly of the ring 12 through a spring 109. Also, a loading guide 110 properly fixed to the chassis C is provided in the loading track of pinch roller 4, so that the pinch roller 4 and tapered roller 107, which are biased radially outwardly of ring 12 through the springs 108, 109 in the escaping direction, abut against the guide roller 110 and are guided therewith from the starting point of loading to the termination thereof. In the loading track of pinch roller 4, a guided plate 112 having a tapered surface 111 abutting against the upper portion of spindle 101 for fixing the vertical position of arm 102, is fixed to a head base 113a carrying heads, 7, 8 and 9. The tape 24, which is pulled by pinch roller 4 simultaneously with the loading movement, is placed on and along a tape guide groove 115 which is slanted corresponding to a head cap 114 at the cylinder portion of rotary head 6. At this time, the upper end of spindle 101 is guided along the tapered lower surface 111 of guide plate 112 corresponding to the guide groove 115. Thus, pinch roller 4 carrying the tape 24 moved downward against the spring 108 between the arm 102 and the cylinder 113, and the tape 4 is placed slantwise on the tape guide groove 115 on rotary head 6 from the side of take-out pin 5 moving relative to pinch roller 4. This slantwise movement is for the purpose of recording video signals slantwise onto the tape 24. The tapered roller 107, which is provided on the small arm 106, abuts against a pin 116 formed at the loading point as shown in Figs. 5 and 12, small arm 106 turns the spring 108, and tapered roller 107 carrying the tape 24 allows the tape to escape outwardly, so that the tape 24 does not back-scrape against the section of tape guided toward rotary head 6 and heads 7, 8.

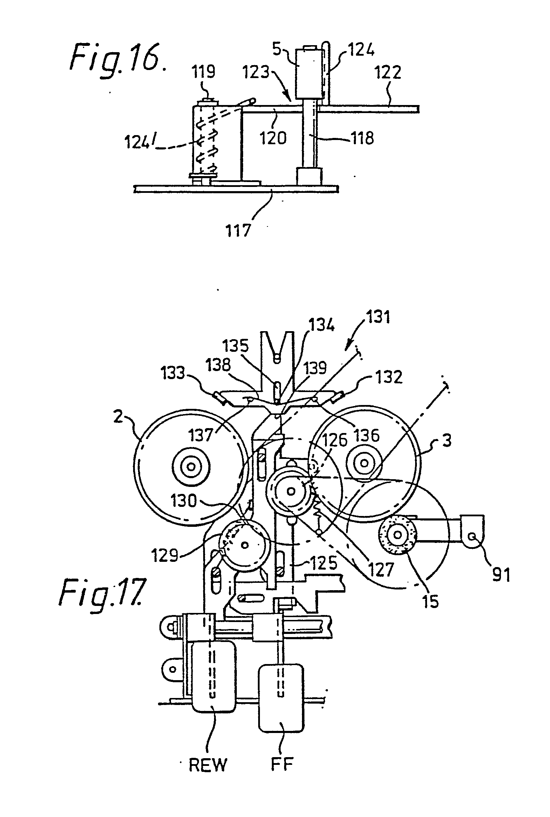

The take-out pin 5, as shown in Figs. 14 and 16, is pivotally mounted on the upper end of spindle 118 provided on an arm 117 extending from the second loading ring 13, a rocking plate 120 is pivotally mounted on a spindle 119 fixed to the arm 117. The rocking plate 120 is pivoted to arm 117 through the spindle 119 slightly towards the ring 13 side with respect to the take-out pin 5, and is provided outwardly from the pin 5 with a tape pin 124. The plate 120 is shaped to surround the spindle 118 outwardly thereof and toward the tape pin 124 side through a curved portion 123, and has at the outer end a projection 122 arranged to abut aginst a pin 121 located on the chassis. Also, the plate 120 allows the curved portion 123 to always abut against the periphery of spindle 118 at the take-out pin 5. When the pin 5 moves to the loaded position, the projection 122 at the outer end of rocking plate 120 abuts against pin 121, so that the plate 120 turns against the spring 124', whereby the pin 124 carrying the tape 24 moves away from the take-out pin 5, thus preventing the section of the tape 24 extending between the pin 124 and the cassette reel from contacting and scraping against the section of tape guided by the pin 5 toward the rotary head 6 and head 8.

Hence, the tape 24, as shown in Fig. 5, is drawn out of the reels 22 and 23 within the cassette 21 and moved to the loaded condition for recording and playback operations, passing successively the pin 124, take-out pin 5, whole width erasing head 8, rotary head 6, voice erasing head 9, voice control head 7, between capstan 10 and pinch roller 4, pin 104, pinch roller 4, and tapered roller 107.

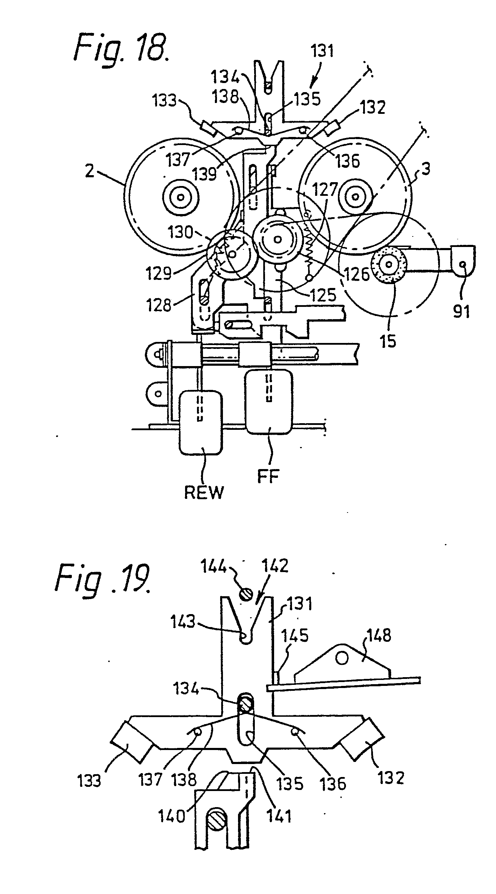

Next, a tape rapid feed and rewinding mechanism will be described with the particular reference to Figs. 17 and 18. A rapid feed button (FF) is arranged self-looking when operated. A rapid feed transmitting gear 126, which is rotatably mounted on a slide plate 125 between the pair of reels 2 and 3, engages with a gear formed at the outer periphery of take-up reel 3 as shown in Fig. 17, thereby rotating the take-up reel 3 in the winding up direction through the gear 126 which is dirven by a drive mechanism to be hereinafter described, the slide plate 125 being biassed in the direction of restoration through a spring 127.

The rewind button (REW), when operated, is arranged to be self-locking, and moves a rewinding transmitting gear 129, which is rotatably mounted on a slide path 128 between the pair of reels 2 and 3, into engagement with a gear on the outer periphery of feed reel 2 and with the rapid feed transmitting gear 126, as shown in Fig. 18, thereby transmitting to the feed reel 2 the rotation of rapid feed gear 126, thus rotating the feed reel 2 in the rewinding direction. The slide path 128 is biased in the return direction by a spring 130.

The rapid feed transmitting gear 126 and rewinding transmitting gear 129 move to a position approximately between the pair of reels 2 and 3, the gear 126 being engageable with the take-up reel 3, and the gear 129 being engageable with the gear 126, when it is not engaged with the reel 3, and with the feed reel 2. Hence, axes of rotation of gears 126, 129 and the locations of slide plates 125, 128 are set to carry out the above operations. The reels 2, 3 and gear 129 are made from synthetic resin and gear 126 is metallic and the metallic gear 126 directly driven by the drive source is meshed selectively with the gear of stationary reel 3 and gear 129. The gear 126 on the slide plate 125, when button (REW) is pushed, slightly moves against the spring 127, and simultaneously the gear 129 is coupled with the gear of reel 2, thereby improving the connection between the gears 126 and 129.

The slide plates 125, 128 co-operate at the tips thereof with a T-shaped brake member 131, which has at both ends resilient members 132, 133 arranged to be pressed into contact with the smaller diameter portions 96, 96a of reels 2, 3 respectively. The assembly 131 is slidable in the operation direction the movement being controlled by a slot 135 in which a pin 134 fixed to the chassis C is located. A torsion spring 138 wound at its centre onto the pin 134 has it ends engaged with respective pins 136, 137 projecting from the ends of the member 131, thereby biasing the member 131 in the return direction (the braking direction). The top 139 of member 131 abuts against the tips 140, 141 of slide plates 125, 128, so that when either the slide plate 125 or 128 is operated (when in rapid feed or rewinding), the member 131 is moved against the bias of spring 138 to move the elastic members 132, 133 away from the smaller diameter portions 96, 96a of reels 2, 3 thereby releasing the reels 2, 3 from the braked condition.

An idle cutout 142 with a root 143 is formed in a recess of T-like shaped member 131, so that a pin 144 on the chassis C may engage selectively between the cutout 142 and the root 143 in dependence upon movement of the member 131. In detail, a projection 145 is provided at one side edge of member 131 and cooperates with a projection 150 formed on the elongate slide plate 86, through two rocking plates 148, 149 pivotable about spindles 146, 147 respectively, as shown in Fig. 13. Hence, during regeneration, video recording and unloading when slide plate 86 is pushed in, the projection 150 on the slide plate 86 pushes the projection 145 on braking member 131, through the rocking plates 148, 149, whereby the member 131 rotates around the pin 134 so that the pin 144 contacts one wall of the cutout 142, at which time the eleastic member 132 leaves the smaller diameter portion 96 and elastic member 133 abuts against the smaller diameter portion 96a of reel 2. Thus, while braking the reel 2, the reel 3 is released to be rotatable by the idler 15 to thereby maintain tension in the tape 24.

Furthermore, another brake member 151, as shown in Fig. 1, is provided for the reel 2, which member 151 is pivoted at an intermediate point along its length. The member 151 has a tongue engagement with the arm 117 carrying the take-out pin 5 to thereby release the reel 2 from braking by the member 151 when the apparatus is in the unloading position. A tongue 153 at the opposite ends of member 151 to the tongue 152 engages with one end of a cassette mounting case (a case pivoted to the chassis, housing the cassette and opening and closing on the cassette base 29) (not shown), so that the brake member 151, when the apparatus is set for unloading a cassette, turns to disengage the tongue 153 from the cassette mounting case to thereby keep the case openable. In other words, during loading, the member 151 is kept in the aforesaid engagement to lock the mounting case against opening.

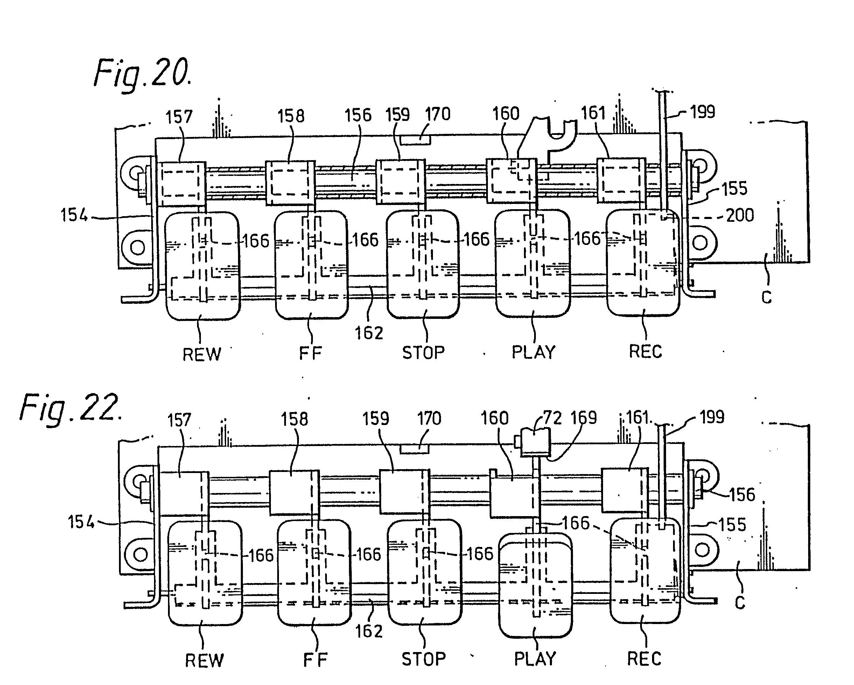

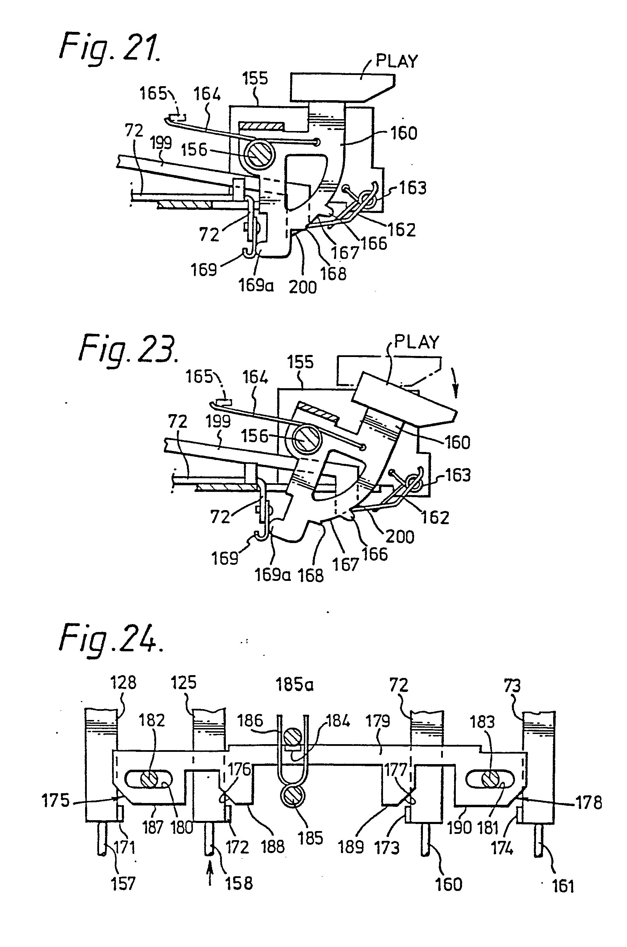

The group 1 of control buttons are self-locking and will be particularly described with reference to Figs. 20 to 23. Bracket members 154, 155 are fixed on the chassis through screws. A single lever shaft 156 is horizontally mounted between the bracket members and pivotably supports at regular spaced intervals operating levers 157, 158, 159, 160 and 161 for the rewinding button (REW), rapid feed button (FF), stopping button (STOP), regeneration button (PLAY) and video recording button (REC) respectively. To the bracket members 164, 155 a retainer 162 shown in cross section in Fig. 21 which is a partially sectional view of the regneration button (PLAY). A spring 163 is wound onto the pivot position of the retainer 162 and is seated at one end to the bracket member 155 and engages at the other end with the lower surface of retainer 162, thereby always biasing the retainer 162 to be turnable clockwise (as shown in Figs. 22 and 23). A two armed torsion spring 164 is wound onto the lever shaft 156 and has one arm with the regeneration lever 160 and the other arm with a proper spring seat 165, thereby biasing the regeneration lever 160 always to the inoperative condition.

The regeneration lever 160 and other levers 157, 158, 159 and 161, as shown in Fig. 21 each have a projection 166 integral with the respective levers, so that when the respective levers 157 to 161 are in the operative position, the projection 166 abuts against the retainer 162 through a slide face 167 to keep each lever in operation condition, and when the levers are in the inoperative position, the retainer 162 engages at its tip with a stopper 168 on the respective levers 157 to 161.

An actuator 169a is provided on each of the levers 157 to 161 which abuts against a leaf spring 169 provided at an operating end of each of the rewinding slide plate 128, rapid feed slide plate 125, regeneration slide plate 72 and video recording slide plate 73. When each of levers 157 to 161 is operated the leaf spring 169 allows the respective slide plates 128, 125, 72 and 73 to slide and to be locked in the operating condition. The reason for interposing these leaf springs 169 is to absorb a stroke difference because the actuator 169a is larger in stroke than the respective plates 128, 125, 72 and 73. In addition, the outer end of lever 159 for the stopping button (STOP) (the outmost end corresponding to the actuator 169a) abuts against a stop 170 and does not engage the tip of retainer 162 with a projection (corresponding to the projection 166) at the chassis C, whereby the stopping lever (STOP) only is not locked in the operative position.

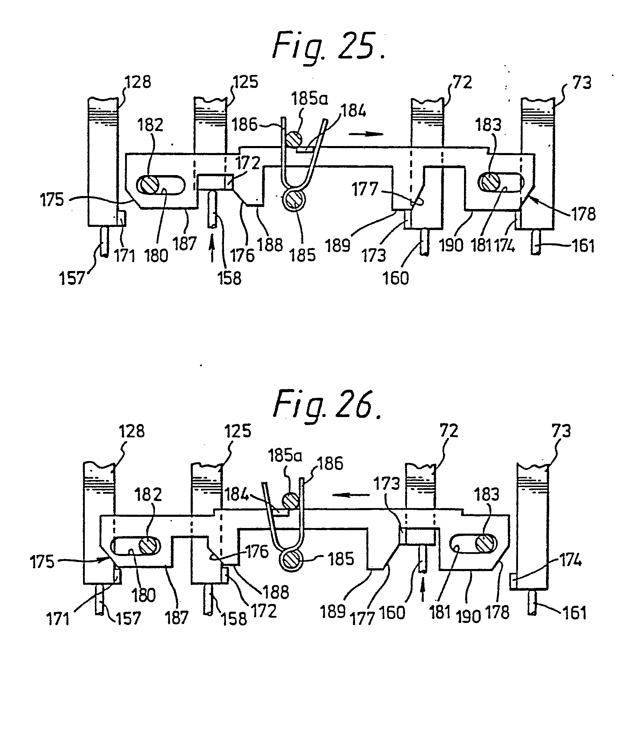

When the regeneration slide plate 72 or video recording slide plate 73, is in the operating condition, the rewinding slide plate 128 and rapid feed slide plate 125, i.e. rewinding button (REW) and rapid feed button (FF), are locked so as not to operate. Conversely, when the plate 128 or 125 is in operating condition, the other slide plates 72, 73 i.e. regeneration button (PLAY) and video recording button (REC), are locked not to operate. In detail, projections 171, 172, 173 and 174, as shown in Fig. 24, are provided on the respective plates 128, 125, 72 and 73 adjacent the respective levers 157, 158, 160, 161. A lock plate 179 having tapered faces 175, 176, 177 and 178 adapted to abut against the projections 171 to 174 respectively is provided so as to be slidable through elongate slots 180, 181 and pins 182, 183 on the chassis in the direction at right angles to and intercrossing the sliding direction of the respective levers 157, 158, 160 and 161. Also, the lock plate 179 has at its central portion a projection 184 which, together with another pin 185a is positioned on the chassis within a U-shaped spring 186 wound onto a pin 185 to urge the plate 179 to a neutral position. Referring to Fig. 26 for example, when the regeneration button (PLAY) is operated to actuate the lever 160, the projection 173 at slide plate 72 abuts against the tapered face 177 of lock plate 179 to move the plate 179 leftwards against a bias in the return direction of the spring 186. The video recording button (REC) is the same as the above. In this condition, the projections 171, 172 abut against the stop faces 187, 188 to restrain both the levers 157, 158 from moving in the operating directions. On the other hand, referring to Figure 25 in particular when the rapid feed button (FF) actuates the lever 158, the projection 172 at slide plate 125 abuts against the tapered face 176 at the lock plate 179 to thereby move the plate 179 rightwards and against a bias in the return direction of the spring 186. In this position, the projections 173, 174 abut against the stop faces 189, 190 on lock plate 179 to thereby restrain both the levers 160, 161, from moving in the operating direction.

Furthermore, the feed reel 2, take-up reel 3 and capstan 10, as shown by the phantom line in Fig. 1, are driven by a belt drive system in such a manner that one pulley 191 is coupled with the flywheel 11 through a belt 193, another pulley 192 is coupled with a pulley 195 at the rapid feed gear 16 through a belt 194, and another pulley 196 at the gear 16 is coupled with a pulley 198 through a belt 197.

Furthermore, an automatic stopping mechanism actuates the plunger 20 through electric elements (not shown) for detecting the finish of unloading. The plunger 20, as shown in Figs. 20 through 23, has an actuating arm 199 engaged by a hook 200 with the foremost end of the L-shaped retainer 162 of the video recording button (REC), so that when the plunger 20 is actuated the retainer 162 is pivotted against the spring 163 to thereby disengage the retainer 162 from the projection 166 of the lever, 157, 158, 160 or 161 respectively of any button in operation.

Furthermore, the capstan 10 and group of heads 7, 8 and 9, are set opposite to the pair of reels 2, 3, sandwiching the rotary head 6. Especially, in this embodiment, the axis of capstan 10, the axis 201 of rotary head 6, and a point midway between the pair of reels 2, 3 are aligned. The first loading gear ring 12 and second loading gear ring 13 have their axes aligned on the above straight line. Hence, the pinch roller 4 and take-out pin 5 are relatively loaded or unloaded to or from the capstan 10 and heads 7, 8 and 9 in the vicinity of the rotary head 6, thereby drawing out the tape nearly at random. Consequently, the mechanism necessary for loading is designed with ease and it is possible to adapt the tape cassette of small size to make the whole mechanism simple and compact.

## Claims

1. A loading mechanism for a cassette tape recorder comprising a drive control operable to select a recording or playback mode, a drive system (12, 13, 18) operable in response to operation of said drive control to draw tape (24) out of a cassette (21) through a pinch roller (4) movable between an unloaded position associated with the cassette (21) and a loaded position to carry the tape (24) to the loaded position for a recording or playback mode of operation, and a stop control operable to restore the pinch roller (4) to the unloaded position to terminate said mode, characterized by the operation of the drive control moving a slide plate (86) to a drive position in which said slide plate (86) urges a drive idler (15) into driving engagement with a tape take-up reel (3) to transport the tape (24); and the drive system including a plate (97) pivotable when the stop control is operated, to prevent the slide plate (86) moving to disengage the drive idler (15) from the take-up reel (3) so that the drawn out tape (24) may be wound into the cassette (21) following restoration of the pinch roller (4) to the unloaded position.

2. A mechanism as claimed in claim 1, characterized in that a locating element (63, 66) is provided which is movable, when the pinch roller (4) reaches the loaded position, to switch on an electrically operable plunger (14), the plunger (14) having first and second elements (85, 88) movable when the plunger (14) is switched on to, respectively, urge the pinch roller (4) against a drive capstan (10), sandwiching the tape (24) therebetween to thereby transport the tape (24), and to move the slide plate (86) to the drive position.

3. A mechanism as claimed in claim 1 or 2, characterized in that the drive idler (15) is connected to the slide plate (86) through resilient means (95) so that the drive idler is urged into contact with said reel (3) only through said resilient means (95).

## Patentansprüche

1. Bandanlegemechanismus für einen Magnetband-Kassettenrecorder mit einer den Aufzeichnungs- oder Abspielvorgang nach Wahl betätigenden Antriebssteuerung, einem Antriebssystem (12, 13, 18), das aufgrund der Betätigung der Antriebssteuerung mit einer Andrückrolle (4) das Magnetband (24) aus einer Kassette (21) herauszieht, wobei die Andrückrolle (4) zwischen einer Nichtladeposition und einer Lade- oder Bandanlegeposition gegenüber der Kassette (21) verschiebbar ist, um das Magnetband (24) für den Aufzeichnungs- oder Abspielbetrieb in die Bandanlegeposition zu bringen, und einer Abschaltsteuerung, mit der die Andrückrolle (4) zur Beendigung des Aufzeichnungs- oder Abspielbetriebes in die Nichtladeposition rückstellbar ist, dadurch gekennzeichnet, daß bei Betätigung der Antriebssteuerung eine Gleitstange (86) in eine Antriebsposition verschoben wird, in der sie eine Antriebsrolle (15) antriebend gegen ein Rad für die Bandaufnahmespule (3) drückt, um das Magnetband (24) zu transportieren, und daß das Antriebssystem einen Kipphebel (97) enthält, der schwenkbar ist, wenn die Stoppsteuerung betätigt wird, um eine Verschiebung der Gleitstange (86) und damit das Abrücken der Antriebsrolle (15) vom Rad (3) der Bandaufnahmespule zu verhindern, damit das herausgezogene Magnetband (24) im Anschluß an die Rückstellung der Andrückrolle (4) in die Nichtladeposition in die Kassette (21) zurückgewickelt wird.

2. Mechanismus nach Anspruch 1, gekennzeichnet durch ein Positionierelement (63, 66), das verschiebbar ist, wenn die Andrückrolle (4) die Bandanlegeposition erreicht, um einen elektrisch betätigbaren Tauchanker (14) zu schalten, der mit Hilfe eines ersten und eines zweiten Elementes (85, 88), die bei eingeschaltetem Tauchanker (14) bewegbar sind, zum einen die Andrückrolle (4) gegen die Banndantriebswelle (10) drückt, wobei für den Bandantrieb das Magnetband (24) dazwischen eingeklemmt wird, und zum anderen die Gleitstange (86) in Antriebsstellung bewegt.

3. Mechanismus nach Anspruch 1 oder 2, dadurch gekennzeichnet, daß die Antriebsrolle (15) mit der Gleitstange (86) über ein Federelement (95) derart verbunden ist, daß die Antriebsrolle durch das Federelement (95) gegen das Rad (3) für die Bandaufnahmespule gedrückt wird.

**Revendications**

1. Mécanisme de chargement pour un enregistreur sur bande contenue dans une cassette comprenant un moyen de commande d'entraînement manoeuvrable pour sélectionner un mode de fonctionnement pour enregistrement ou pour lecture, un moyen d'entraînement (12, 13, 18) actionnable en réponse à la manoeuvre de ce moyen de comande d'entraînement pour extraire une bande (24) en dehors d'une cassette (21) au moyen d'un galet presseur (4) mobile entre une position de déchargement associée à la cassette (21) et une position de chargement afin d'entraîner la bande (24) jusqu'à la position de chargement en vue du fonctionnement en enregistrement ou en lecture, un moyen d'arrêt manoeuvrable pour remettre le galet presseur (4) à sa position de déchargement à la fin du mode de fonctionnement, caractérisé en ce que la manoeuvre du moyen de commande d'entraînement déplace une plaque coulissante (86) jusqu'à une position d'entraînement dans laquelle cette plaque coulissante (86) repousse un galet de renvoi (15) en contact d'entraînement avec une bobine (3) d'enroulemen de bande pour déplacer la bande (24), le moyen d'entraînement comprenant une plaque (97) montée pour pivoter quand le moyen de commande d'arrêt est actionné afin d'empêcher la plaque coulissante (86) de se déplacer pour dégager le galet de renvoi (15) de la bobine d'enroulement (3) pour que la bande (24) tirée en dehors puisse être enroulée à l'intérieur de la cassette (21) à la suite du retour du galet presseur (4) à la position de déchargement.

2. Mécanisme selon la revendication 1 caractérisé en ce qu'un élément de localisation (63, 66) est prévu pour être déplacé quand le galet presseur (4) atteint sa position de chargement, afin de mettre en service un plongeur (14) fonctionnant électriquement, ce plongeur ayant un premier et un second élément (85, 88) déplaçables quand ce plongeur est mis en service afin de pousser respectivement le galet presseur (4) contre un cabestan d'entraînement (10), la bande (24) étant serrée entre eux pour être déplacée, et pour déplacer la plaque glissante (86) à la position d'entraînement.

3. Mécanisme selon l'une quelconque des revendications 1, 2 caractérisé en ce que le galet de renvoi (15) est réuni à la plaque glissante (86) par l'intermédiaire de moyens élastiques (95) de sorte que ce galet de renvoi est poussé en contact avec ladite bobine (3) seulement par l'intermédiaire de ces moyens élastiques (95).

# Fig.1.

Fig.2.

Fig.3.

Fig.4.

# Fig.5.

Fig.6.

Fig.7.

Fig. 8.

Fig. 9.

Fig.10.

Fig.11.

# Fig.12.

Fig.13.

Fig. 14.

Fig. 15.

Fig.16.

Fig.17.

REW    FF

## Fig. 18.

## Fig .19.

*Fig.20.*

157  158  156  159  170  160  161  199

154

166  166  166  166

162

REW     FF     STOP     PLAY     REC

155
200
C

*Fig.22.*

157  158  159  170  160  72  169  161  199

154

166  166  166  166

162

REW     FF     STOP     PLAY     REC

156
155
C

0 0045 328

# Fig. 21.

# Fig. 23.

# Fig. 24.

# Fig. 25.

# Fig. 26.